# EUROPEAN PATENT APPLICATION

(11) **EP 3 833 094 A1**
(43) Date of publication of application: **09.06.2021**
(21) Application number: 18928773.3
(22) Date of filing: 30.07.2018
(51) Int. Cl.: H04W 28/04, H04W 72/04, H04W 72/12

(54) **USER TERMINAL**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2018/028399
(87) International publication number: WO 2020/026291

(57) **Abstract**

For appropriately transmitting a delivery acknowledgement signal in a case where at least one of a transmission timing and a resource of the delivery acknowledgement signal is flexibly set, a user terminal according to an aspect of the present disclosure includes a receiving section that receives a downlink shared channel scheduled using downlink control information, a transmitting section that transmits a delivery acknowledgement signal for the downlink shared channel, and a control section that controls transmission of the delivery acknowledgement signal using a downlink allocation index included in the downlink control information for each group determined based on a transmission slot for an uplink control channel designated by the downlink control information or for each group determined based on an uplink control channel resource designated by the downlink control information.

## Description

### Technical Field

The present disclosure relates to a user terminal in a next-generation mobile communication system.

### Background Art

In the UMTS (Universal Mobile Telecommunications System) network, the specifications of long-term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE are also under study (also referred to as, for example, FRA (Future Radio Access), 5G (5th generation mobile communication system), 5G+ (plus), NR (New Radio), NX (New radio access), FX (Future generation radio access), LTE Rel. 14, LTE Rel. 15 or later versions, and so on).

In the existing LTE system (for example, LTE Rel. 8 to 14), the user terminal (User Equipment (UE)) controls reception of the downlink shared channel (for example, Physical Downlink Shared Channel (PDSCH)) based on downlink control information (DCI, also referred to as DL assignment, etc.) transmitted on a downlink control channel (for example, Physical Downlink Control Channel (PDCCH)). Also, the user terminal controls transmission of the uplink shared channel (for example, Physical Uplink Shared Channel (PUSCH)) based on the DCI (also referred to as UL grant, etc.).

In the existing LTE systems, downlink (DL) and uplink (UL) communications are performed using 1-ms subframes (also referred to as Transmission Time Intervals (TTIs) and the like). These subframes are the time unit for transmitting one channel-encoded data packet, and serve as the unit of processing in, for example, scheduling, link adaptation, retransmission control (Hybrid Automatic Repeat Request (HARQ)) and so on.

Furthermore, in the existing LTE system, control is performed so that a delivery acknowledgement signal (also referred to as HARQ-ACK, ACK/NACK, or A/N) for the DL signal (for example, PDSCH) is fed back four subframes later.

### Citation List

### Non-Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR, 5G, 5G+, or Rel. 15 and later versions), a transmission timing of a delivery acknowledgement signal (also called HARQ-ACK, ACK/NACK, or A/N) for the DL signal (for example, PDSCH) is expected to be designated for a UE using DCI or the like. Therefore, HARQ-ACKs corresponding to PDSCHs transmitted in different transmission periods (for example, slots) may be transmitted in the same slot.

In NR, a resource (for example, uplink control channel resource) used for transmitting HARQ-ACK may be designated to a UE using DCI or the like. Thus, different uplink control channel resources may be designated in a given transmission period (for example, a slot).

The UE feeds back the HARQ-ACK based on the codebook (on a codebook to codebook basis). When at least one of the transmission timing (for example, slot) and the resource used for transmitting each HARQ-ACK is flexibly controlled, the problem is how the generation of the HARQ-ACK codebook is controlled. If the HARQ-ACK codebook fails to be appropriately generated, the communication quality may be compromised.

Thus, an object of the present disclosure is to provide a user terminal capable of appropriately transmitting a delivery acknowledgement signal in a case where at least one of a transmission timing and a resource of the delivery acknowledgement signal is flexibly set.

### Solution to Problem

A user terminal according to an aspect of the present disclosure includes a receiving section that receives a downlink shared channel scheduled using downlink control information, a transmitting section that transmits a delivery acknowledgement signal for the downlink shared channel, and a control section that controls transmission of the delivery acknowledgement signal using a downlink allocation index included in the downlink control information for each group determined based on a transmission slot for an uplink control channel designated by the downlink control information or for each group determined based on an uplink control channel resource designated by the downlink control information.

### Advantageous Effects of Invention

According to one aspect of the present disclosure, it is possible to appropriately transmit the delivery acknowledgement signal even when at least one of transmission timing and the resource of the delivery acknowledgement signal is flexibly set.

### Brief Description of Drawings

Fig. 1 is a diagram illustrating an example of a HARQ-ACK transmission method.
Fig. 2 is a diagram illustrating an example of a HARQ-ACK transmission method using counter DAI and total DAI.
Fig. 3 is a diagram illustrating an example of a case where HARQ-ACK transmission is controlled for each DCI group.
Fig. 4 is a diagram illustrating another example of a case where HARQ-ACK transmission is controlled for each DCI group.
Fig. 5 is a diagram illustrating an example of HARQ-ACK transmission according to aspect 1-1.
Fig. 6 is a diagram illustrating an example of HARQ-ACK transmission according to aspect 1-2.
Fig. 7 is a diagram illustrating an example of HARQ-ACK transmission according to aspect 2-1.
Fig. 8 is a diagram illustrating an example of HARQ-ACK transmission according to aspect 2-2.
Fig. 9 is a diagram illustrating an example of a schematic structure of a radio communication system according to the present embodiment.
Fig. 10 is a diagram illustrating an example of an overall structure of a radio base station according to the present embodiment.
Fig. 11 is a diagram illustrating an example of a functional structure of the radio base station according to the present embodiment.
Fig. 12 is a diagram illustrating an example of an overall structure of a user terminal according to the present embodiment.
Fig. 13 is a diagram illustrating an example of a functional structure of the user terminal according to the present embodiment.
Fig. 14 is a diagram illustrating an example of a hardware structure of the radio base station and the user terminal according to the present embodiment.

### Description of Embodiments

Semi-static or dynamic determination of HARQ-ACK codebook (may also be referred to as HARQ-ACK size) by a UE in future radio communication systems (hereinafter, also referred to as NR) has been under study. The base station may notify the UE of information indicating how to determine the HARQ-ACK codebook (for example, information indicating whether the HARQ-ACK codebook is semi-static or dynamic) using higher layer signaling. The HARQ-ACK codebook may also be referred to as PDSCH HARQ-ACK codebook.

Here, the higher layer signaling may be, for example, any of radio resource control (RRC) signaling, medium access control (MAC) signaling, broadcast information, and so on, or a combination thereof.

For the MAC signaling, for example, a MAC control element (MAC CE), a MAC PDU (Protocol Data Unit), or the like may be used. The broadcast information may be, for example, a master information block (MIB), a system information block (SIB), a minimum system information (Remaining Minimum System Information (RMSI)), other system information (OSI), or the like.

When the UE is configured to determine the HARQ-ACK codebook quasi-statically (or semi-static HARQ-ACK codebook) in a given cell, cell group (CG), PUCCH group, or the like, such determination of the HARQ-ACK codebook may be referred to as a type 1 HARQ-ACK codebook determination. When the UE is configured to determine the HARQ-ACK codebook dynamically (or dynamic HARQ-ACK codebook), such determination of the HARQ-ACK codebook may be referred to as a type 2 HARQ-ACK codebook determination.

In the type 1 HARQ-ACK codebook determination, the UE may determine the number of HARQ-ACK bits and the like based on the configuration set by higher layer signaling. The configuration thus set may include, for example, the number (the maximum number, the minimum number, or the like, for example) of DL transmissions (for example, PDSCHs) scheduled in a range associated with the HARQ-ACK feedback timing.

The range is also referred to as a HARQ-ACK bundling window, a HARQ-ACK feedback window, a bundling window, a feedback window, and the like. The bundling window may correspond to a range of at least one of space, time and frequency.

On the other hand, in the type 2 HARQ-ACK codebook determination, the UE may determine the number of HARQ-ACK bits based on a bit string in a Downlink Assignment Indicator (Index) (DAI) field included in downlink control information (DL assignment, for example).

The UE may determine (generates) the HARQ-ACK information bit based on the determined HARQ-ACK codebook, and transmit the generated HARQ-ACK using at least one of an uplink control channel (Physical Uplink Control Channel (PUCCH)) and an uplink shared channel (Physical Uplink Shared Channel (PUSCH)).

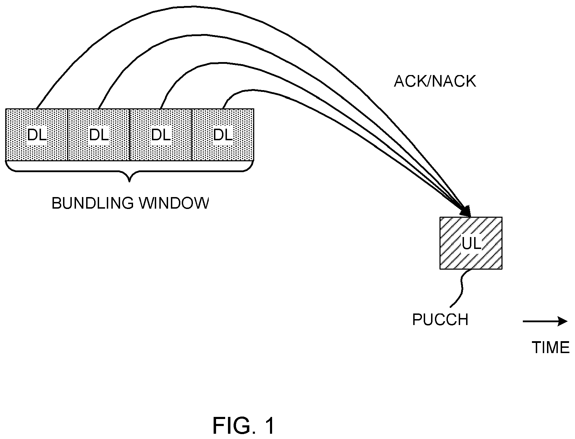

Fig. 1 is a diagram illustrating an example of HARQ-ACK feedback control using PUCCH. In this example, parts denoted by "DL" or "UL" indicate given resources (time/frequency resource, for example), and a period of each part is in any appropriate time unit (for example, one or a plurality of slots, mini slots, symbols, or subframes). The same applies to the later examples.

In the case of Fig. 1, the UE uses a resource of a given uplink control channel to transmit A/N corresponding to the PDSCH scheduled in a given range (for example, a bundling window or HARQ-ACK occasion) associated with the HARQ-ACK feedback. The HARQ-ACK feedback timing for each PDSCH may be designated for the UE in downlink control information (for example, DL assignment) for scheduling each PDSCH.

When the dynamic HARQ-ACK codebook is applied, the codebook size of the HARQ-ACK to be multiplexed can be dynamically changed based on the number of PDSCHs scheduled. Thus, the resource for allocating the HARQ-ACK can be more efficiency improved. In this case, the number of bits of HARQ-ACK to be multiplexed may be determined based on the PDSCH received by the UE. However, this configuration involves a problem in that a failure to detect a part or all of the DCI (or PDCCH) with which the PDSCH is scheduled by the UE results in the number of PDSCHs actually scheduled differing from the number of PDSCHs received by the UE.

Therefore, the UE controls HARQ-ACK transmission (for example, HARQ-ACK codebook size, HARQ-ACK arrangement order, and the like) based on a DL allocation index (DAI) included in the DCI designating DL transmission (for example, PDSCH).

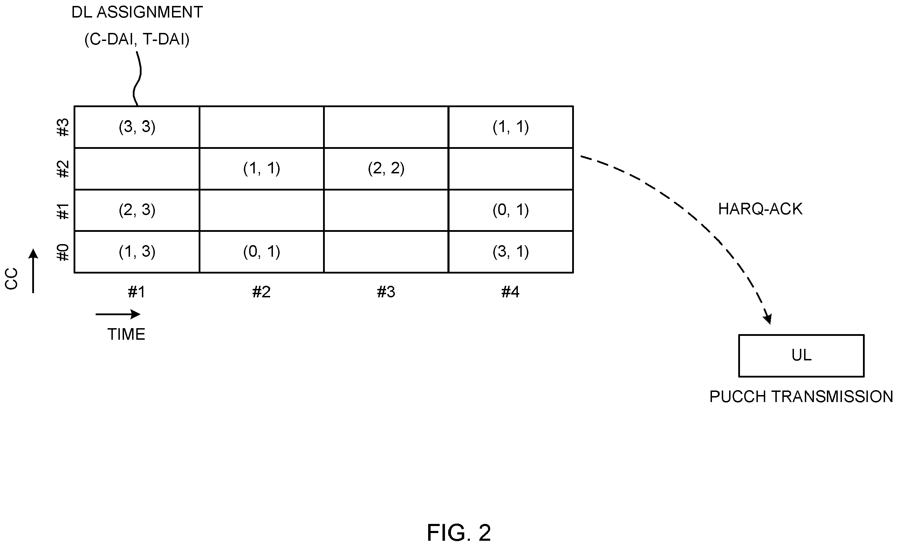

Fig. 2 illustrates an example of determination of the codebook size of the HARQ-ACK to be multiplexed on the PUCCH and the HARQ-ACK bit arrangement determined based on the DAI included in the DCI. The HARQ-ACK bit arrangement is an arrangement of the HARQ-ACK bits (or the order of the HARQ-ACK bits) when the UE transmits one or more HARQ-ACKs. By controlling the HARQ-ACK bit arrangement (or order) according to a given rule, the recognition of HARQ-ACK corresponding to each PDSCH can be consistent between the UE and the base station.

In Fig. 2, four CCs (or cells) are configured for the UE, and four time units (for example, four slots) correspond to a range (for example, a bundling window) associated with the feedback timing of HARQ-ACK. The bundling window may be determined based on the HARQ-ACK timing and PUCCH resource indicated by the downlink control information.

In Fig. 2, CC #0, CC #1, and CC #3 in the first slot are scheduled for the PDSCH. Similarly, for the PDSCH, CC #0 and CC #2 in the second slot, CC #2 in the third slot, and CC #0, CC #1 and CC #3 in the fourth slot are scheduled. Thus, this corresponds to a case where nine pieces of DL data are actually scheduled in a range of the bundling window (here, 4CC × 4 = 16 slots in total).

In this case, the base station includes the information about the total number of pieces of scheduled DL data in the downlink control information used for the PDSCH scheduling instruction and transmits the information to the UE. When the bundling window is configured with a plurality of time units, for DCI transmitted in each slot, the total number of pieces of DL data up to the slot may be notified by the base station.

The information about the total number of pieces of DL data scheduled corresponds to the total number of bits (or codebook size) of HARQ-ACK fed back by the UE. The information about the total number of pieces of DL data scheduled may be referred to as total DAI (T-DAI).

The DCI used for scheduling each PDSCH may include a counter DAI (C-DAI) in addition to the total DAI. The counter DAI indicates the cumulative value of the scheduled data. For example, each of one or a plurality of pieces of CC downlink control information scheduled in a certain time unit (slot or subframe) may include counter DAI numbered in the CC index order. Also, when the HARQ-ACKs for DL data scheduled over a plurality of time units are fed back at once (for example, when the bundling window includes a plurality of slots), the counter DAI can be applied over the plurality of time units.

Fig. 2 illustrates a case where each downlink control information designating DL data scheduling includes counter DAI and total DAI, in a bundling window. For example, for nine pieces of scheduled DL data, the counter DAI is accumulated from a period with a small slot index and in an ascending order of the CC index. Here, a case where the counter DAI is two bit information is described. Thus, data scheduled from CC #1 in the first slot to CC #4 in the fourth slots are numbered by "1", "2", "3", and "0" in this order, with this sequence repeated.

The total DAI indicates the total value (total number) of scheduled data. For example, each of one or a plurality of pieces of CC downlink control information scheduled in a certain time unit (slot or subframe) may include the number of scheduled data. Thus, pieces of the downlink control information transmitted in the same slot has the same total DAI value. Also, when the HARQ-ACKs for DL data scheduled over a plurality of time units are fed back at once (for example, when the bundling window includes a plurality of slots), each total DAI is configured over the plurality of time units.

In Fig. 2, three pieces of DL data are scheduled in the first slot, and thus the total DAI of the DL assignment transmitted in the first slot is three ("3"). Two pieces of DL data are scheduled in the second slot (total of five pieces from the first slot), and thus the total DAI of the DL assignment transmitted in the second slot is five ("1"). One DL data is scheduled in the third slot (total of six pieces from the first slot), and thus the total DAI of the DL assignment transmitted in the third slot is six ("2"). Three pieces of DL data are scheduled in the fourth slot (total of nine pieces from the first slot), and thus the total DAI of the DL assignment transmitted in the fourth slot is nine ("1").

In Fig. 2, each downlink control information designating DL data scheduling includes the total DAI, in a bundling window. The total number of pieces of DL data scheduled in each slot and before is included in the downlink control information in the slot as the total DAI. In the case described herein, the total DAI and the counter DAI are both two bit information. Thus, the counter DAI included in the downlink control information with the maximum CC index among CCs with which the DL data is scheduled in a certain slot has a value that is the same as that of the total DAI in the slot.

The counter DAI and the total DAI can also be set based on the number of codewords (CW) instead of the number of CCs. Fig. 2 illustrates the case where the counter DAI and total DAI are set based on the number of CCs (or the case where each CC is 1 CW), and the counter DAI and total DAI may be set based on the number of CWs.

When a dynamic HARQ-ACK codebook is configured from the base station using higher layer signaling or the like, the UE may control the bit arrangement of the HARQ-ACK (also called HARQ-ACK bit order or A/N allocation order) to be fed back, based on the counter DAI included in the downlink control information.

When the counter DAI included in the received downlink control information is discontinuous, the UE feeds back the target (DL data) of the discontinuity to the base station as NACK. With this configuration where the NACK is used as the feedback when the UE fails to detect the downlink control information with which data on certain CC is scheduled, retransmission control can be appropriately performed even when the UE cannot recognize the CC itself that has been failed to be detected.

In this manner, the order of the HARQ-ACK bits is determined based on the value of the counter DAI (counter DAI value). Furthermore, the counter DAI value in a given time unit (for example, PDCCH monitoring occasion) is determined based on the CC (or cell) index.

Definition of at least a first DCI format and a second DCI format as DCIs for scheduling DL transmissions (for example, PDSCH) in NR is under study. The first DCI format and the second DCI format are defined with different contents, payload sizes, and the like. The first DCI format may be referred to as a DCI format 1_0 and the second DCI format may be referred to as a DCI format 1_1.

Similarly, definition of at least a DCI format 0_0 and a DCI format 0_1 as DCIs for scheduling UL transmissions (for example, PUSCH) is under study.

In a contemplated configuration in NR, the counter DAI is included in both the first DCI format and the second DCI format, while the total DAI is included in one of the DCI formats. Specifically, the total DAI may be included in the second DCI format and not in the first DCI format.

Next, HARQ-ACK feedback control using PUSCH will be described.

An operation of the UE for multiplexing the HARQ-ACK feedback in PUSCH not scheduled with the DCI format or PUSCH scheduled with the DCI format 0_0 may be the same as that for multiplexing HARQ-ACK in PUCCH. Thus, 2-bit counter DAI may be included in at least one of the first DCI format 1_0 and the second DCI format 1_1, whereas 2-bit total DAI may be included in one DCI format (for example, the second DCI format 1_1).

On the other hand, in PUSCH scheduled with the DCI format 0_1, when the UE multiplexes and feeds back HARQ-ACK, the 2-bit counter DAI is included in at least one of the first DCI format 1_0 and the second DCI format 1_1. Further, UL DAI (for example, the first 2 bits) included in the DCI for scheduling PUSCH (for example, the DCI format 0_1) may be used as the total DAI.

When only a single serving cell is configured, the second DCI format 1_1 may not include the total DAI.

When HARQ-ACK transmission is performed using the dynamic HARQ-ACK codebook, it may be performed in units of transport blocks (TB) or in units of code blocks (CB). In this case, the HARQ-ACK codebook may be generated separately (a codebook and a subcodebook may be generated) for the TB-based HARQ-ACK transmission and the CB-based HARQ-ACK transmission.

As the HARQ-ACK subcodebook, for example, 2-bit counter DAI may be included in at least one of the first DCI format 1_0 and the second DCI format 1_1, whereas 2-bit total DAI may be included in one DCI format (for example, the second DCI format 1_1). Furthermore, the first 2 bits of the UL-direction total DAI may be included in the DCI format 0_1 as the first subcodebook, and the next 2 bits of the UL-direction total DAI may be included in DCI format 0_1 as the next subcodebook.

In this way, the UE uses the DCI transmitted by the PDCCH to control the feedback of HARQ-ACK to the PDSCH scheduled with the DCI. A range of PDCCH (also referred to as the PDCCH monitoring occasion) monitored by the UE may be determined by at least one of control resource set (CORESET) and search space configuration. The PDCCH monitoring occasion may be configured regardless of the HARQ-ACK codebook type (type 1 or type 2) applied.

The UE detects the DL DCI for scheduling the PDSCH. The DL DCI may be grouped (classified into groups) depending on which the uplink control channel resource (for example, PUCCH resource) is designated therewith. For example, pieces of DL DCI designating the same PUCCH resource may be grouped. Whether pieces of DL DCI designate the same PUCCH resource may be determined by parameters such as {K0, K1, PUCCH resource indicator, PDSCH-aggrecationFactor}.

For example, K0 corresponds to the PDSCH scheduling timing (for example, the offset between DCI and the scheduled PDSCH). The UE may be notified of K0 using at least one of DCI and a higher layer (for example, RRC signaling). K1 corresponds to the HARQ-ACK transmission timing (for example, the offset between PDSCH and HARQ-ACK) for PDSCH scheduled using DCI. The UE may be notified of K1 using at least one of DCI and a higher layer.

Furthermore, the PUCCH resource indicator corresponds to the PUCCH resource used for transmitting HARQ-ACK. The UE may be notified of the PUCCH resource indicator using at least one of DCI and a higher layer. The PDSCH repetition factor (PDSCH-aggrecationFactor) corresponds to the number of repeated PDSCH transmissions (or the number of repeated transmission candidates). The UE may be notified of PDSCH repetition factor using at least one of DCI and a higher layer.

The UE may control HARQ-ACK transmission processing (for example, generation of HARQ-ACK codebook) for each DCI group. For example, the UE may generate a HARQ-ACK codebook for each DCI group associated with the same PUCCH resource. In this case, for a given DL DCI group, the HARQ-ACK bit order in the HARQ-ACK codebook may be determined by the counter DAI. The total value of the HARQ-ACK bits may be determined by the total DAI or UL DAI, for example, based on a given rule set in advance as described above. Thus, at least one of the counter DAI and the total DAI may be applied for each DCI group.

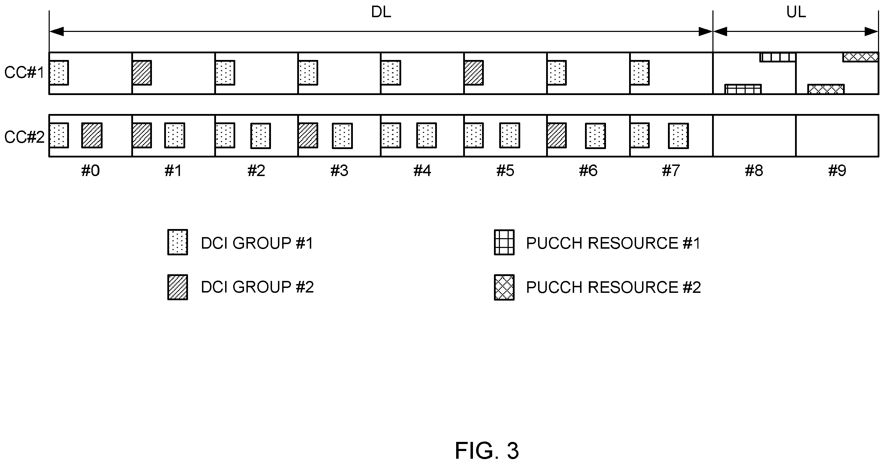

Fig. 3 is a diagram illustrating an example of a case where HARQ-ACK transmission is controlled for each DCI group. In the example illustrated in Fig. 3, eight DL slots (slots #0 to #7) and two UL slots (slots #8 and #9) are set for two CCs (CC #1 and CC #2). For example, the CC #1 may be the primary cell (or PSCell, PUCCH SCell), and the CC #2 may be the secondary cell.

In each DL slot of CC #1 and CC #2, DCI for scheduling PDSCH is transmitted. Here, a case is described where the DCI designating a PUCCH resource #1 (for example, the PUCCH resource in slot #8) belongs to DCI group #1, and the DCI designating a PUCCH resource #2 (for example, the PUCCH resource in slot #9) belongs to the DCI group #2.

In this case, the UE transmits the HARQ-ACK for PDSCH scheduled using DCI belonging to the DCI group #1 by using the PUCCH resource #1. In this case, for the HARQ-ACK bit order of the HARQ-ACK codebook, the counter DAI and the total DAI notified by the DCI belonging to DCI group #1 may be used. Similarly, the UE transmits the HARQ-ACK for PDSCH scheduled using DCI belonging to the DCI group #2 by using the PUCCH resource #2. In this case, for the HARQ-ACK bit order of the HARQ-ACK codebook, the counter DAI and the total DAI notified by the DCI belonging to DCI group #2 may be used.

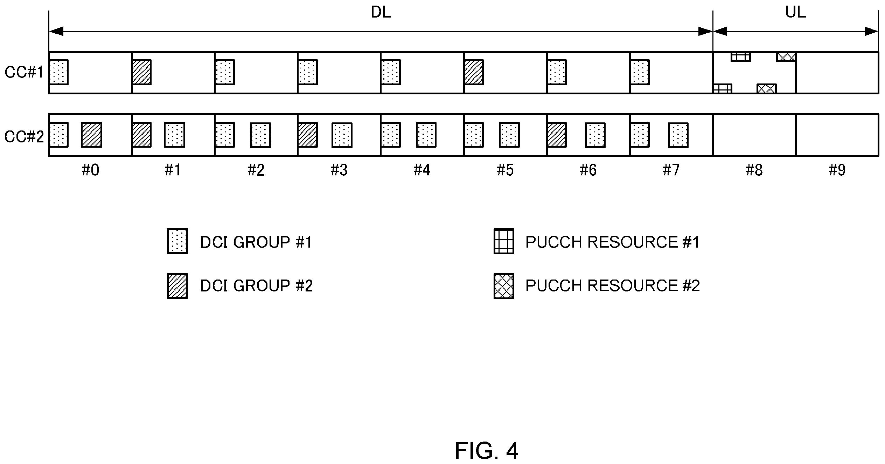

In this way, in NR, the transmission timing (for example, slot) of HARQ-ACK for PDSCH and the PUCCH resource can be flexibly configured. Note while Fig. 3 illustrates the case where one PUCCH resource is configured for each slot (or within one slot), there may be case where a plurality of PUCCH resources are set in one slot for the sake of smaller delay (see Fig. 4).

Fig. 4 illustrates a case where the PUCCH resource #1 designated by the DCI group #1 and the PUCCH resource #2 designated by the DCI group #2 are configured to be in the same slot (here, slot #8).

On the other hand, some UEs may not support the transmission of HARQ-ACK using a plurality of PUCCH resources in one slot. In such a case, when there is a UE that cannot transmit a plurality of PUCCH resources (HARQ-ACK) in one slot and a UE that can transmit a plurality of PUCCH resources (HARQ-ACK) in one slot, the problem is how the dynamic HARQ-ACK transmission is controlled.

The present inventors came up with an idea of controlling HARQ-ACK transmission by applying different HARQ-ACK transmission processes (for example, HARQ-ACK codebook generation and the like) considering UE capability, or controlling HARQ-ACK transmission by applying the common HARQ-ACK transmission processing (for example, HARQ-ACK codebook generation and the like) regardless of the UE capability.

Hereinafter, embodiments according to the present invention will be described in detail with reference to the drawings. The following aspects may be applied independently or may be applied in combination.

Furthermore, the following description can be applied to at least one of a case where HARQ-ACK is multiplexed on the uplink control channel (for example, PUCCH) and a case where HARQ-ACK is multiplexed on the uplink shared channel (for example, PUSCH). For example, in the following description, downlink control information (DCI) may be applied to DCI (DCI formats 1_0 and 1_1) for scheduling DL transmission, or to DCI (DCI formats 0_0 and 0_1) for scheduling UL transmission.

### (First Aspect)

In the first aspect, the HARQ-ACK transmission processing (for example, HARQ-ACK codebook generation) is controlled differently based on the UE capability. The UE and the base station may use different HARQ-ACK transmission methods using the dynamic codebook based on the UE capability information. HARQ-ACK transmission control for the UE that does not support the transmission of HARQ-ACK using a plurality of PUCCH resources in one slot (Aspect 1-1), and HARQ-ACK transmission control for the UE supporting the HARQ-ACK transmission using a plurality of PUCCH resources in one slot (Aspect 1-2) are described below.

### <Aspect 1-1>

A UE that cannot transmit a plurality of PUCCH resources (HARQ-ACK) in one slot generates a HARQ-ACK codebook (for example, DAI application) on a slot-by-slot basis. Furthermore, the UE controls the HARQ-ACK transmission for each group determined based on the HARQ-ACK transmission timing notified using DCI (for example, a PUCCH transmission slot).

For example, the UE generates a HARQ-ACK codebook based on the DAI (at least one of the counter DAI and the total DAI) included in one or more DCIs designating at least the same slot as the transmission timing of PUCCH (or HARQ-ACK). The UE that has received a plurality of pieces of DCI designating different PUCCH resources in the same slot may execute the HARQ-ACK transmission processing assuming that the plurality of pieces of DCIs belong to the same group. In this case, the UE may transmit HARQ-ACK using the PUCCH resource designated by the last DCI received in the group.

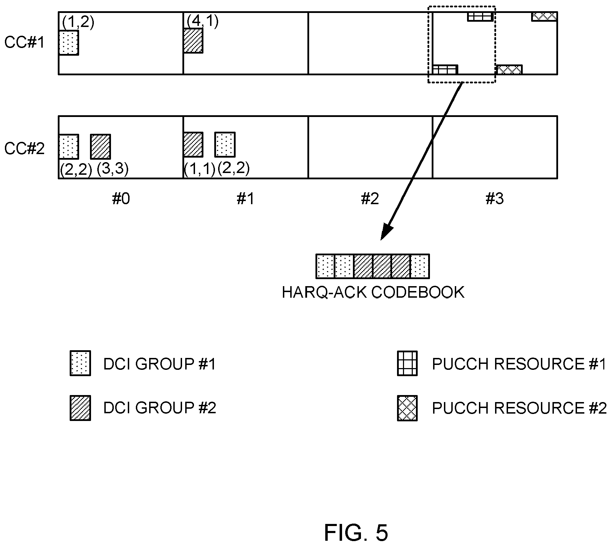

Fig. 5 is a diagram illustrating an example of HARQ-ACK transmission according to aspect 1-1. In the example illustrated in Fig. 5, two CCs (CC #1 and CC #2) are set. For example, the CC #1 may be the primary cell, and the CC #2 may be the secondary cell. The number of CCs that can be configured is not limited to this. Fig. 5 illustrates a case where HARQ-ACK for DCI (or PDSCH) transmitted in slots #0 and #1 is transmitted in slot #3. An example of a UE operation will be described below.

The UE monitors the PDCCH monitoring occasion and attempts to detect the DCI transmitted on the PDCCH. The PDCCH monitoring occasion monitored by the UE may be determined by at least one of control resource set (CORESET) and search space configuration. The PDCCH monitoring occasion may be configured regardless of the HARQ-ACK codebook type.

The UE that has detected DCI, performs reception of the PDSCH or transmission of the PUSCH scheduled by the DCI. For example, the UE that has received the DCI for scheduling the PDSCH, receives the PDSCH and transmits HARQ-ACK for PDSCH based on the information instructed by the DCI.

The UE may group (classify into groups) the received DCI (for example, DL DCI) based on the slot (for example, slot index) designated by the DCI for PUCCH transmission. For example, pieces of DCI that designate the same slot for PUCCH transmission may be determined to belong to the same group, and HARQ-ACK transmission may be controlled on a group-by-group basis. The UE may determine the slot designated by DCI for PUCCH transmission based on parameters such as {K0, K1, PUCCH resource indicator, PDSCH-aggrecationFactor}.

Alternatively, when performing grouping in units of PUCCH resource designated by DCI, the UE may assume that the DCI groups corresponding to the PUCCH group provided in the same slot are the same DCI group. In the case illustrated in Fig. 5, the UE determines that the DCI group #1 corresponding to PUCCH resource #1 configured to be in slot #3 and the DCI group #2 corresponding to PUCCH resource #2 belong to the same DCI group.

Fig. 5 illustrates the case where the UE receives DCI for scheduling PDSCH in each of slot #0 and slot #1, in CC #1. For example, with DCI transmitted in slot #0 of CC #1, K0 = 0, K1 = 3, PUCCH resource indicator = PUCCH resource #1, PDSCH repetition factor = 0 (or no repetition factor is set) may be notified. With DCI transmitted in a slot of CC #1, K0 = 0, K1 = 2, PUCCH resource indicator = PUCCH resource #2, PDSCH repetition factor = 0 may be notified. Here, it is assumed that the DCI and the PDSCH scheduled using the DCI are in the same slot.

Furthermore, a case is described where the UE receives DCI for scheduling PDSCH in each of slot #0 and slot #1, in CC #2. Here, the case where two pieces of DCI are detected in each of slot #0 and slot #1 is described. For example, with first DCI transmitted in slot #0 of CC #2, K0 = 0, K1 = 3, PUCCH resource indicator = PUCCH resource #1, PDSCH repetition factor = 0 may be notified. With second DCI transmitted in a slot #0 of CC #2, K0 = 0, K1 = 3, PUCCH resource indicator = PUCCH resource #2, PDSCH repetition factor = 0 may be notified.

With DCI first transmitted in slot #1 of CC #2, K0 = 0, K1 = 2, PUCCH resource indicator = PUCCH resource #1, PDSCH repetition factor = 0 may be notified. With second DCI transmitted in a slot #1 of CC #2, K0 = 0, K1 = 2, PUCCH resource indicator = PUCCH resource #2, PDSCH repetition factor = 0 may be notified. Here, it is assumed that the DCI and the PDSCH scheduled using the DCI are in the same slot.

In this case, the DCI received in slots #0 and #1 of CC #1 and the DCI received in slots #0 and #1 of CC #2 designate the same slot as the PUCCH transmission slot (slot #3 in Fig. 5). Therefore, the UE determines that the DCI received in slots #0 and #1 of CC #1 and the DCI received in slots #0 and #1 of CC #2 belong to the same group, and controls the HARQ-ACK transmission for PDSCH scheduled by each DCI.

For example, the UE uses the DAI included in pieces of DCI belonging to the same group to generate the HARQ-ACK codebook. In Fig. 5, pieces of DCI belonging to the same group (DCI group #1 + DCI group #2) include counter DAI indicating the count value accumulated in each group and total DAI. The total DAI may be updated at a given interval (for example, PDCCH monitoring occasion). The HARQ-ACK bit order in the HARQ-ACK codebook may be determined by the counter DAI. The total value of the HARQ-ACK bits may be determined by the total DAI or UL DAI, for example, based on a given rule set in advance as described above.

As described above, in the aspect 1-1, even when a plurality of pieces of DCI designate different PUCCH resources in the same slot, the transmission of HARQ-ACK is controlled with the plurality of DCIs determined to belong to the same group. In this case, the PUCCH resource used for transmitting HARQ-ACK may be determined based on a given condition. For example, the UE may transmit HARQ-ACK by using the PUCCH resource designated by the last received DCI among the pieces of DCI belonging to the same group. In Fig. 5, since the last received DCI designates PUCCH resource #1, HARQ-ACK is transmitted using PUCCH resource #1 without using PUCCH resource #2.

The method of selecting the PUCCH resource is not limited to this, and the PUCCH resource designated by the DCI received first may be used, or the PUCCH resource having the largest number of PUCCH resources designated by the DCI may be used.

In this manner, the UE may transmit the HARQ-ACK feedback using one PUCCH resource in one slot. Furthermore, because the HARQ-ACK feedback is transmitted using one PUCCH resource in one slot, the DAI (counter DAI, total DAI) for the HARQ-ACK codebook is a value as a result of accumulation without distinguishing between PUCCH resources designated by respective pieces of DCI, if the pieces of DCI designate the same slot for PUCCH transmission.

In Fig. 5, a case where HARQ-ACK feedback is transmitted using the PUCCH resource of slot #3 of CC #1 (for example, the primary cell) is illustrated as an example, but HARQ-ACK feedback can be transmitted with a group formed for each slot of any CC (cell).

In this manner, a UE that cannot transmit a plurality of PUCCH resources (HARQ-ACK) in one slot may generate a HARQ-ACK codebook on a slot-by-slot basis, so that all HARQ-ACK can be transmitted with a HARQ-ACK codebook generated by a slot-by-slot basis, even when different PUCCH resources in one slot are designated.

### <Aspect 1-2>

A UE that can transmit a plurality of PUCCH resources (HARQ-ACK) in one slot generates a HARQ-ACK codebook (for example, DAI application) in units of PUCCH resource. Furthermore, the UE controls the HARQ-ACK transmission for each group determined based on the PUCCH resource notified using DCI. In this case, the UE may assume transmission of a delivery acknowledgement signal using different PUCCH resources in given slot.

For example, the UE generates a HARQ-ACK codebook based on the DAI (at least one of the counter DAI and the total DAI) included in one or more DCIs designating the same PUCCH resource (for example, the resource with the same time and frequency). The UE that has received a plurality of pieces of DCI designating different PUCCH resources in the same slot may execute the HARQ-ACK transmission processing assuming that the plurality of pieces of DCIs belong to different groups.

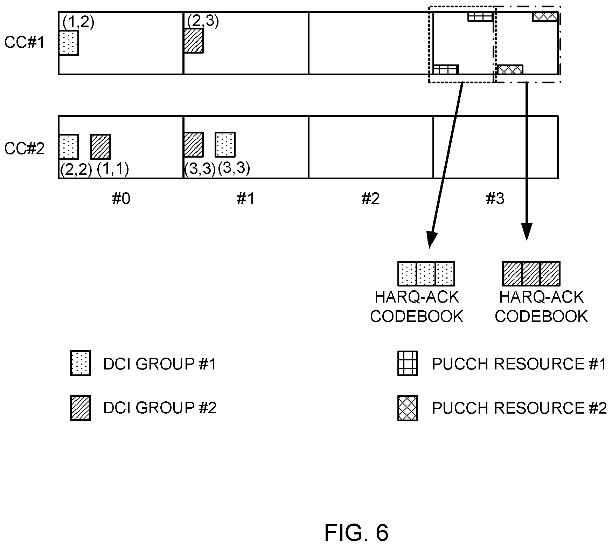

Fig. 6 is a diagram illustrating an example of HARQ-ACK transmission according to aspect 1-2. In the example illustrated in Fig. 6, two CCs (CC #1 and CC #2) are set. For example, the CC #1 may be the primary cell, and the CC #2 may be the secondary cell. The number of CCs that can be configured is not limited to this.

Fig. 6 illustrates a case where HARQ-ACK for DCI (or PDSCH) transmitted in slots #0 and #1 is transmitted in slot #3, as in Fig. 5. Furthermore, in Fig. 6, a case is assumed where the DCI received by the UE, the PDSCH scheduled using the DCI (for example, K0), the transmission timing of HARQ-ACK designated by the DCI (for example, K1), and the PUCCH resource designated by the DCI are the same as those in Fig. 5. An example of a UE operation will be described below. In the following description, the description of the part the content of which is the same as that in Fig. 5 will be omitted.

The UE may group (classify into groups) the received DCI (for example, DL DCI) based on the PUCCH resource designated by the DCI for PUCCH transmission. For example, pieces of DCI that designate the same PUCCH resource for PUCCH transmission may be determined to belong to the same group, and HARQ-ACK transmission may be controlled on a group-by-group basis. The UE may determine the PUCCH resource designated by DCI for PUCCH transmission based on parameters such as {K0, K1, PUCCH resource indicator, PDSCH-aggrecationFactor}.

In Fig. 6, it is assumed that with the DCI of each slot, the UE is notified of K0, K1, the PUCCH resource indicator, and the PDSCH repetition factor as in Fig. 5. In this case, the pieces of DCI received in slots #0 and #1 of CC #1 designate different PUCCH resources. Also, the two pieces of DCI received in slot #0 of CC #2 designate different PUCCH resources, and the two pieces of DCI received in slot #1 of CC #2 designate different PUCCH resources.

On the other hand, the UE determines that pieces of DCI designating PUCCH resource #1 (for example, DCI in slot #0 of CC #1, the first DCI in slot #0 of CC #2, and the second DCI in slot #1 of CC #2) belong to the same group (DCI group #1). The UE determines that pieces of DCI designating PUCCH resource #2 (for example, DCI in slot #1 of CC #1, the second DCI in slot #0 of CC #2, and the first DCI in slot #1 of CC #2) belong to the same group (DCI group #2).

In this case, the UE controls HARQ-ACK transmission in units of DCI groups belonging to the same group. The network (for example, a base station) may control the accumulation of DAI (counter DAI and total DAI) for pieces of DCI belonging to the same DCI group. The UE may assume that the accumulation of DAI (counter DAI and total DAI) for pieces of DCI belonging to the same DCI group is controlled.

For example, the UE uses the DAI included in pieces of DCI belonging to the same group to generate the HARQ-ACK codebook. The HARQ-ACK bit order in the HARQ-ACK codebook may be determined by the counter DAI. The total value of the HARQ-ACK bits may be determined by the total DAI or UL DAI, for example, based on a given rule set in advance as described above.

As described above, in the aspect 1-2, when a plurality of pieces of DCI designate different PUCCH resources in the same slot, the transmission of HARQ-ACK is controlled with the PUCCH resources grouped. In this case, the UE may transmit different HARQ-ACKs (or generate a HARQ-ACK codebook) using different PUCCH resources in the same slot.

In this manner, the UE may transmit the HARQ-ACK feedback using a plurality of PUCCH resources in one slot. Furthermore, because the HARQ-ACK feedback is transmitted using a plurality of PUCCH resources in one slot, the DAI (counter DAI, total DAI) for the HARQ-ACK codebook is a value as a result of accumulation on a group-by-group basis.

In Fig. 6, a case where HARQ-ACK feedback is transmitted using the PUCCH resource in slot #3 of CC #1 (for example, the primary cell) is illustrated as an example, but HARQ-ACK feedback can be transmitted with a group formed for each slot of any CC (cell).

In this way, a UE that can transmit a plurality of PUCCH resources (HARQ-ACK) in one slot generates a HARQ-ACK codebook for each PUCCH resource, and thus can transmit HARQ-ACK by effectively utilizing the PUCCH resources. Thus, the communication throughput can be improved. Furthermore, by applying different methods for the HARQ-ACK transmission processing (for example, generating a HARQ-ACK codebook) based on the UE capability, the HARQ-ACK transmission can be controlled according to the UE capability. As a result, deterioration of communication quality can be suppressed and communication throughput can be improved.

### (Second Aspect)

In the second aspect, the HARQ-ACK transmission processing (for example, HARQ-ACK codebook generation) is controlled regardless of the UE capability. The UE and the base station may transmit the HARQ-ACK by using the dynamic HARQ-ACK codebook generated by a common method regardless of UE capability information. HARQ-ACK transmission control (aspect 2-1) using a dynamic HARQ-ACK codebook generated using a common rule (for example, units of PUCCH resource) regardless of the UE capability, and HARQ-ACK transmission control (aspect 2-2) in which PUCCH resource configuration is controlled regardless of the UE capability, will be described below.

### <Aspect 2-1>

The UE controls HARQ-ACK transmission using the dynamic HARQ-ACK codebook based on a common rule regardless of UE capability (for example, based on control in units of PUCCH resource). For example, the UE controls the HARQ-ACK transmission by generating a HARQ-ACK codebook (for example, applying DAI) for each group determined based on the uplink control channel resource.

Specifically, a unified (common) HARQ-ACK codebook configuration may be defined for the UE that can transmit a plurality of PUCCH resources (HARQ-ACK) in one slot, and the UE that cannot transmit a plurality of PUCCH resources (HARQ-ACK) in one slot. For example, the UE generates a HARQ-ACK codebook based on the DAI (at least one of the counter DAI and the total DAI) included in one or more DCIs designating the same PUCCH resource (for example, the resource with the same time and frequency) regardless of the UE capability.

The UE that has received a plurality of pieces of DCI designating different PUCCH resources in the same slot may execute the HARQ-ACK transmission processing assuming that the plurality of pieces of DCIs belong to different groups. In this case, when there are a plurality of groups that use different PUCCH resources in the same slot, the UE may control whether to transmit HARQ-ACK corresponding to the plurality of groups based on the UE capability, or to transmit HARQ-ACK corresponding to any one of the groups.

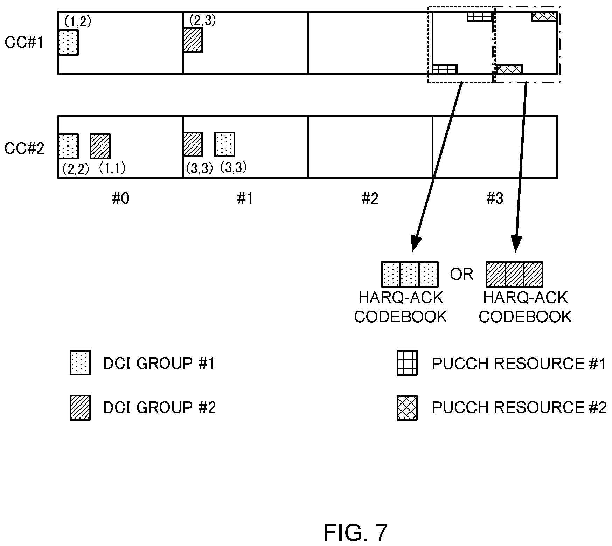

Fig. 7 is a diagram illustrating an example of HARQ-ACK transmission according to aspect 2-1. In the example illustrated in Fig. 7, two CCs (CC #1 and CC #2) are set. For example, the CC #1 may be the primary cell, and the CC #2 may be the secondary cell. The number of CCs that can be configured is not limited to this.

Fig. 7 illustrates a case where HARQ-ACK for DCI (or PDSCH) transmitted in slots #0 and #1 is transmitted in slot #3, as in Figs. 5 and 6. Furthermore, in Fig. 7, a case is assumed where the DCI received by the UE, the PDSCH scheduled using the DCI (for example, K0), the transmission timing of HARQ-ACK designated by the DCI (for example, K1), and the PUCCH resource designated by the DCI are the same as those in Figs. 5 and 6.

An example of an operation of the UE that cannot transmit a plurality of PUCCH resources (HARQ-ACK) in one slot will be described below. In the following description, the description of the part the content of which is the same as that in Figs. 5 and 6 will be omitted. The operation of the UE that can transmit a plurality of PUCCH resources (HARQ-ACK) in one slot may be the same as that in Fig. 6 (aspect 1-2).

The UE groups (classify into groups) the received DCI (for example, DL DCI) based on the PUCCH resource designated by the DCI for PUCCH transmission. For example, pieces of DCI that designate the same PUCCH resource for PUCCH transmission may be determined to belong to the same group, and HARQ-ACK transmission may be controlled on a group-by-group basis. The UE may determine the PUCCH resource designated by DCI for PUCCH transmission based on parameters such as {K0, K1, PUCCH resource indicator, PDSCH-aggrecationFactor}.

In Fig. 7, it is assumed that with the DCI of each slot, the UE is notified of K0, K1, the PUCCH resource indicator, and the PDSCH repetition factor as in Figs. 5 and 6. In this case, the UE determines that pieces of DCI designating PUCCH resource #1 (for example, DCI in slot #0 of CC #1, the first DCI in slot #0 of CC #2, and the second DCI in slot #1 of CC #2) belong to the same group (DCI group #1). The UE determines that pieces of DCI designating PUCCH resource #2 (for example, DCI in slot #1 of CC #1, the second DCI in slot #0 of CC #2, and the first DCI in slot #1 of CC #2) belong to the same group (DCI group #2).

In this case, the UE controls HARQ-ACK transmission in units of DCI groups belonging to the same group. The network (for example, a base station) may control the accumulation of DAI (counter DAI and total DAI) for pieces of DCI belonging to the same DCI group. The UE may assume that the accumulation of DAI (counter DAI and total DAI) for pieces of DCI belonging to the same DCI group is controlled.

For example, the UE uses the DAI included in pieces of DCI belonging to the same group to generate the HARQ-ACK codebook. The HARQ-ACK bit order in the HARQ-ACK codebook may be determined by the counter DAI. The total value of the HARQ-ACK bits may be determined by the total DAI or UL DAI, for example, based on a given rule set in advance as described above.

In Fig. 7, a HARQ-ACK codebook is generated for each of the first DCI group and the second DCI group. In this case, a UE that does not support HARQ-ACK transmission using a plurality of PUCCH resources in one slot may perform control to select and transmit HARQ-ACK corresponding to any DCI group.

The DCI group (or PUCCH resource used for transmission) for transmitting HARQ-ACK may be determined based on a given condition. For example, the UE may transmit HARQ-ACK by selecting the DCI group (or PUCCH resource) to which the last received DCI belongs among the pieces of DCI that designate the same slot as the HARQ-ACK transmission timing. In Fig. 7, since the last received DCI designates DCI group 1 (or PUCCH resource #1), the HARQ-ACK corresponding to DCI group 2 is not used, and the HARQ-ACK bit corresponding to DCI group 1 is transmitted.

The method of selecting the DCI group (or PUCCH resource) is not limited to this, and the DCI group designated by the first received DCI may be selected, or the DCI group with a large number of pieces of DCI for scheduling PDSCH may be selected.

A UE that cannot transmit a plurality of PUCCH resources (HARQ-ACK) in one slot may generate only the HARQ-ACK codebook corresponding to any one PUCCH resource, when a plurality of PUCCH resources are designated in one slot. This eliminates the need to generate a HARQ-ACK codebook corresponding to other PUCCH resources that are not transmitted, whereby the processing load on the UE can be reduced.

When a network (for example, a base station) designates different PUCCH resources in the same slot using DCI, control is performed so that reception processing and retransmission processing are executed assuming that HARQ-ACK (for example, HARQ-ACK using either PUCCH resource #1 or PUCCH resource #2) corresponding to any one group (for example, one of DCI group #1 and DCI group #2) is transmitted from a given UE.

A base station may control the reception processing and the retransmission processing with a delivery acknowledgement signal corresponding to any one of the groups determined to be transmitted from a given user terminal, when there are a plurality of groups using different PUCCH resources in the same slot, in a case where the HARQ-ACK is transmitted using DAI included in DCI for each group determined based on the PUCCH resource designated by the DCI.

With the HARQ-ACK transmission processing (for example, application of DAI or the like) executed based on the common rule regardless of the UE capability, the processing operation can be simplified.

### <Aspect 2-2>

In the aspect 2-1 (Fig. 7), a UE that cannot transmit a plurality of PUCCH resources (HARQ-ACK) in one slot may be only capable of transmitting the HARQ-ACK codebook using any one of the PUCCH resources. For example, when selecting a PUCCH resource designated by the last received DCI, it may only be possible to transmit a HARQ-ACK codebook using PUCCH resource #1. In this case, the UE cannot transmit the HARQ-ACK bit of PDSCH scheduled using DCI group #2.

Therefore, when controlling the HARQ-ACK transmission processing based on the common rule regardless of the UE capability, control may be performed so that only one PUCCH resource is designated (or set) in one slot for a given UE. The given UE may be a UE incapable of transmitting a plurality of PUCCH resources (HARQ-ACK) in one slot.

For example, the base station may control the number of PUCCH resources designated in one slot (for example, whether different PUCCH resources are to be set in one slot) based on the UE capability information. Specifically, the base station may perform control to set one or less PUCCH resources for each slot for a given UE and one or more PUCCH resources for each slot for UEs other than the given UE.

The given UE may assume that DCI does not designate different PUCCH resources in the same slot.

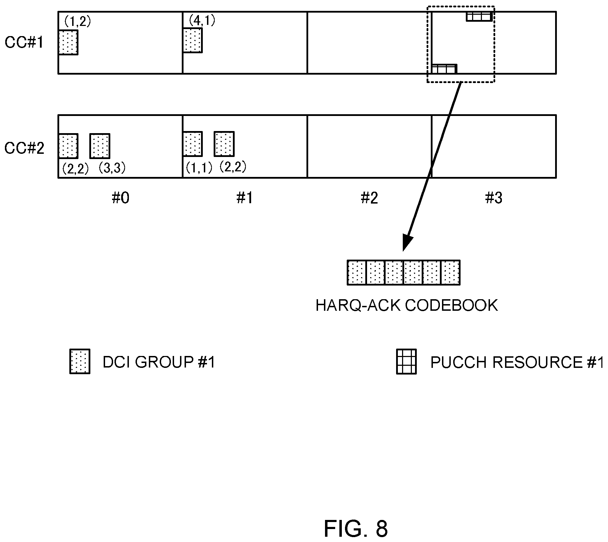

Fig. 8 is a diagram illustrating an example of HARQ-ACK transmission according to aspect 2-2. Fig. 8 illustrates a case where HARQ-ACK for DCI (or PDSCH) transmitted in slots #0 and #1 is transmitted in slot #3, as in Fig. 7. Furthermore, in Fig. 8, a case is assumed where the DCI received by the UE, the PDSCH scheduled using the DCI (for example, K0), and the transmission timing of HARQ-ACK designated by the DCI (for example, K1) are the same as those in Fig. 5 to Fig. 7. On the other hand, in the illustrated case, the PUCCH resource designated by DCI is different from Fig. 5 to Fig. 7, and pieces of DCI all designate PUCCH resource #1.

That is, as illustrated in Fig. 8, when one or less (for example, one) PUCCH resource is designated in one slot for a given UE, only one DCI group is formed in the same slot. Thus, even when a HARQ-ACK codebook is generated for each DCI group formed based on PUCCH resources, there is no HARQ-ACK codebook that cannot be transmitted by a UE incapable of transmitting a plurality of PUCCH resources in one slot.

The base station performs control so that DCI does not designate different PUCCH resources in the same slot, when the HARQ-ACK is transmitted using the DAI included in the DCI for each group determined based on the PUCCH resource designated using the DCI. In other words, the base station performs control so that a PUCCH resource indicator for designating the same PUCCH resource in the same slot is included in the DCI to be transmitted to a given UE.

In this manner, with the control performed so that a plurality of PUCCH resources are not designated in one slot for a given UE, the HARQ-ACK transmission can be flexibly controlled based on the UE capability, while adopting common HARQ-ACK transmission processing. Thus, the communication delays can be suppressed, and the resource use efficiency can be improved.

### (Radio Communication System)

Now, the structure of a radio communication system according to the present embodiment will be described below. In this radio communication system, communication is performed using at least one combination of the above-mentioned plurality of aspects.

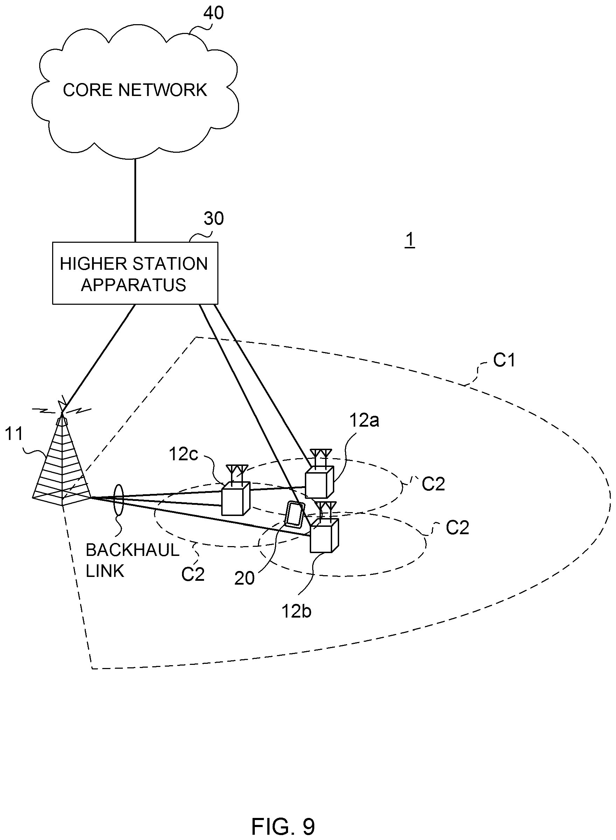

Fig. 9 is a diagram illustrating an example of a schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA (Future Radio Access), New-RAT (Radio Access Technology), and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number and so on of cells and user terminals 20 are not limited to those illustrated in the drawings.

The user terminals 20 can connect with both the radio base station 11 and the radio base stations 12. The user terminals 20 may use the macro cell C1 and the small cells C2 simultaneously using CA or DC. Furthermore, the user terminals 20 may apply CA or DC using a plurality of cells (CCs) (for example, five or fewer CCs or six or more CCs) .

Between the user terminals 20 and the radio base station 11, communication can be carried out using a carrier of a relatively low frequency band (for example, 2 GHz) and a narrow bandwidth (referred to as an existing carrier, a legacy carrier and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can carry out communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or a channel, and may indicates, for example, at least one of the subcarrier interval, the bandwidth, symbol length, the cyclic prefix length, the subframe length, the TTI length, the number of symbols per TTI, the radio frame configuration, the filtering processing, the windowing processing, and so on.

The radio base station 11 and the radio base station 12 (or between two radio base stations 12) may be connected by wire (for example, means in compliance with the CPRI (Common Public Radio Interface) such as optical fiber, an X2 interface and so on) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a macro base station, an aggregate node, an eNB (eNodeB), a transmitting/receiving point and so on. Also, the radio base stations 12 are radio base stations having local coverages, and may be referred to as small base stations, micro base stations, pico base stations, femto base stations, HeNBs (Home eNodeBs), RRHs (Remote Radio Heads), transmitting/receiving points and so on. Hereinafter, the radio base stations 11 and 12 will be collectively referred to as radio base stations 10, unless specified otherwise.

The user terminals 20 are terminals to support various communication schemes such as LTE and LTE-A, and may be either mobile communication terminals (mobile stations) or stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single carrier communication scheme to mitigate interference between terminals by dividing the system bandwidth into bands configured with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (Physical Downlink Shared Channel (PDSCH)), which is used by each user terminal 20 on a shared basis, a broadcast channel (Physical Broadcast Channel (PBCH)), downlink L1/L2 control channels and so on are used as downlink channels. User data, higher layer control information, SIBs (System Information Blocks) and so on are transmitted in the PDSCH. Further, a master information block (MIB) is transmitted by PBCH.

The downlink L1/L2 control channels include at least one of a downlink control channel (PDCCH (Physical Downlink Control Channel) and/or an EPDCCH (Enhanced Physical Downlink Control CHannel)), a PCFICH (Physical Control Format Indicator Channel), and a PHICH (Physical Hybrid-ARQ Indicator Channel). Downlink control information (DCI), including PDSCH and/or PUSCH scheduling information, and so on, is communicated by the PDCCH.

Note that scheduling information may be notified via DCI. For example, the DCI to schedule receipt of DL data may be referred to as DL assignment, and the DCI to schedule transmission of UL data may be referred to as UL grant.

The number of OFDM symbols to use for the PDCCH is transmitted by the PCFICH. HARQ (Hybrid Automatic Repeat reQuest) delivery acknowledgment information (also referred to as, for example, retransmission control information, HARQ-ACKs, ACK/NACKs and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on are used as uplink channels. User data, higher layer control information, and so on are communicated by the PUSCH. Also, in the PUCCH, downlink radio link quality information (Channel Quality Indicator (CQI)), delivery acknowledgement information, scheduling requests (SRs) and so on are communicated. By means of the PRACH, random access preambles for establishing connections with cells are transmitted.

In the radio communication systems 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (Sounding Reference Signals (SRSs)), demodulation reference signals (DMRSs) and so on are communicated as uplink reference signals. Note that, DMRSs may be referred to as user terminal-specific reference signals (UE-specific Reference Signals). Also, the reference signals to be communicated are by no means limited to these.

### <Radio Base Station>

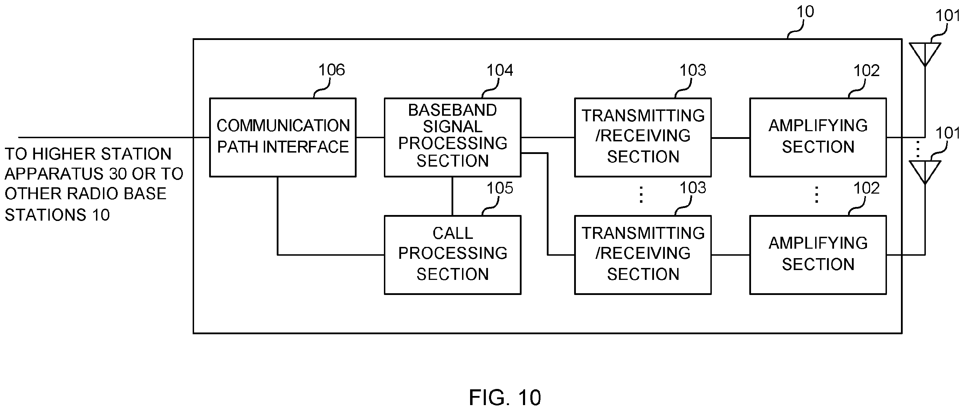

Fig. 10 is a diagram illustrating an example of an overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to the user terminal 20 by the downlink is input from the host station apparatus 30 to the baseband signal processing section 104 via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

The baseband signals that are pre-coded and output from the baseband signal processing section 104 per antenna are converted into a radio frequency band in the transmitting/receiving sections 103, and then transmitted. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10,manages the radio resources, and the like.

The communication path interface 106 transmits and receives signals to and from the higher station apparatus 30 via a given interface. Also, the communication path interface 106 may transmit and receive signals (backhaul signaling) with other radio base stations 10 via an interbase station interface (which is, for example, optical fiber that is in compliance with the CPRI (Common Public Radio Interface), the X2 interface, etc.).

Note that the transmitting/receiving section 103 may further include an analog beam forming section that performs analog beam forming. The analog beam forming section can be constituted by an analog beam forming circuit (for example, a phase shifter, a phase shift circuit) or an analog beam forming apparatus (for example, a phase shifter) described based on common understanding of the technical field to which the present invention pertains. Also, the transmitting/receiving antenna 101 can be constituted by an array antenna, for example. Also, the transmitting/receiving section 103 is configured such that that single BF and multi BF can be used.

In addition, the transmitting/receiving section 103 transmits, to the user terminal 20, the downlink (DL) signal (including at least one of the DL data signal (downlink shared channel), the DL control signal (downlink control channel), and the DL reference signal), and receives, from the user terminal 20, the uplink (UL) signal (including at least one of the UL data signal, the UL control signal, and the UL reference signal).

Furthermore, the transmitting/receiving section 103 may transmit downlink control information used for scheduling the downlink shared channel and receive a delivery acknowledgement signal for the downlink shared channel.

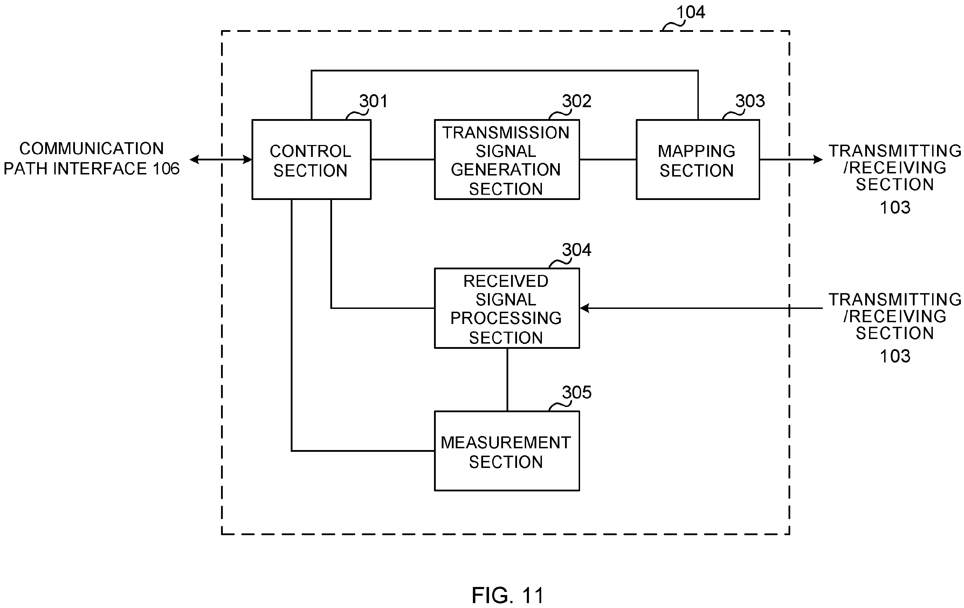

Fig. 11 is a diagram illustrating an example of a functional structure of the radio base station according to the present embodiment. Note that, although this example will primarily show functional blocks that pertain to characteristic parts of the present embodiment, the radio base station 10 may be assumed to have other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be composed of a controller, a control circuit, or a control apparatus, which is described based on general understanding of the technical field to which the present disclosure pertains.

For example, the control section 301 controls the generation of signals in the transmission signal generation section 302, the allocation of signals in the mapping section 303, and the like. Moreover, the control section 301 controls the receiving processing for signals in the received signal processing section 304, measurement of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals and so on, based on the results of deciding whether or not retransmission control is necessary for uplink data signals, and so on.

Further, the control section 301 may perform control so that different uplink control channel resources in the same slot are not designated with the downlink control information, when the delivery acknowledgement signal is transmitted using a downlink allocation index included in the downlink control information for each group determined based on the uplink control channel resource designated by the downlink control information.

In a case where the delivery acknowledgement signal is transmitted using a downlink allocation index included in the downlink control information for each group determined based on the uplink control channel resource designated by the downlink control information, the control section 301 may determine that the delivery acknowledgement signal corresponding to any one of the groups is transmitted from the given user terminal, when there are a plurality of groups using different uplink control channel resources in the same slot.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding process, the modulation process, and so on, by using coding rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, etc.) that are transmitted from the user terminal 20. The received signal processing section 304 can be composed of a signal processor, a signal processing circuit, or a signal processing apparatus, which is described based on general understanding of the technical field to which the present disclosure pertains.

The received signal processing section 304 outputs, to the control section 301, information decoded by the receiving processes. For example, when a PUCCH to contain an HARQ-ACK is received, the received signal processing section 304 outputs this HARQ-ACK to the control section 301. Also, the received signal processing section 304 outputs the received signal and/or the signals after the receiving processes to the measurement section 305.

The measurement section 305 performs measurements with respect to the received signals. The measurement section 305 can be constituted by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio)), the signal strength (for example, RSSI (Received Signal Strength Indicator)), transmission path information (for example, CSI), and so on. The measurement results may be output to the control section 301.

### <User terminal>

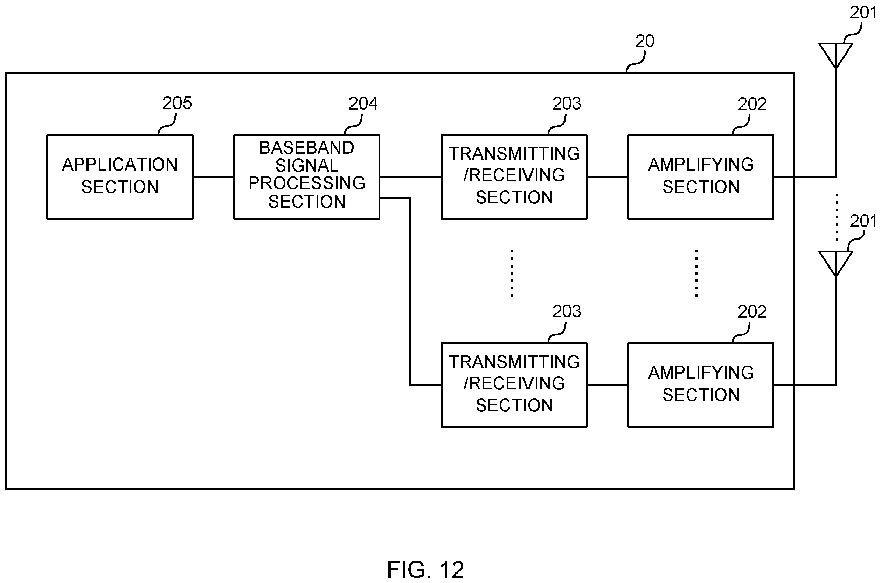

Fig. 12 is a diagram illustrating an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beam forming section that performs analog beam forming. The analog beam forming section can be constituted by an analog beam forming circuit (for example, a phase shifter, a phase shift circuit) or an analog beam forming apparatus (for example, a phase shifter) described based on common understanding of the technical field to which the present invention pertains. Also, the transmitting/receiving antenna 201 can be constituted by an array antenna, for example. Also, the transmitting/receiving section 203 is configured such that that single BF and multi BF can be used.

Further, the transmitting/receiving section 203 receives a downlink (DL) signal (including at least one of the DL data signal (downlink shared channel), the DL control signal (downlink control channel), and the DL reference signal) from the radio base station 10, and transmits an uplink (UL) signal (including at least one of the UL data signal, the UL control signal, and the UL reference signal) to the radio base station 10.

Furthermore, the transmitting/receiving section 203 may receive downlink shared channel scheduled using the downlink control information and transmit the delivery acknowledgement signal for the downlink shared channel.

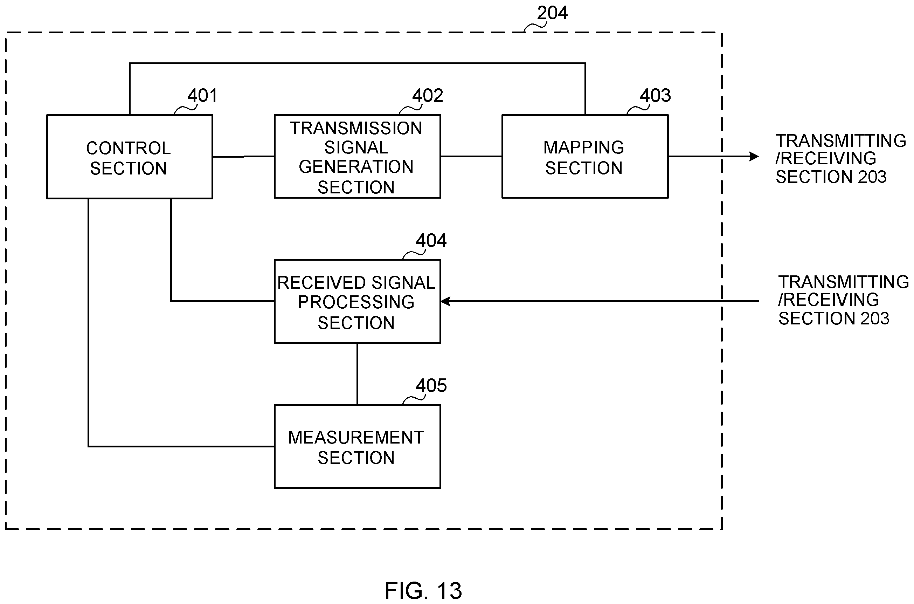

Fig. 13 is a diagram illustrating an example of a functional structure of a user terminal according to the present embodiment. Note that, although this example will primarily show functional blocks that pertain to characteristic parts of the present embodiment, it may be assumed that the user terminal 20 have other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be composed of a controller, a control circuit, or a control apparatus, which is described based on general understanding of the technical field to which the present disclosure pertains.

For example, the control section 401 controls the generation of signals in the transmission signal generation section 402, the allocation of signals in the mapping section 403, and the like. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

Further, the control section 401 may perform control on transmission of the delivery acknowledgement signal using the downlink allocation index included in the downlink control information, for each group determined based on the transmission slot of the uplink control channel designated using the downlink control information, or for each group determined based on the uplink control channel resource designated by the downlink control information.

Further, the control section 401 may select, based on the UE capability, one of the method of controlling transmission of the delivery acknowledgement signal for each group determined based on the transmission slot for the uplink control channel, and the method of controlling transmission of the delivery acknowledgement signal for each group determined based on the uplink control channel resource.

The control section 401 may assume the transmission of the delivery acknowledgement signal using different uplink control channel resources in a given slot, when the transmission of the delivery acknowledgement signal is controlled for each group determined based on the uplink control channel resource.

The control section 401 may control the transmission of the delivery acknowledgement signal for each group determined based on the uplink control channel resource regardless of the UE capability.

In a case where there are a plurality of groups using different uplink control channel resources in the same slot, the control section 401 may perform control so that the delivery acknowledgement signal corresponding to any one of the plurality of groups is transmitted, when the transmission of the delivery acknowledgement signal is controlled for each group determined based on the uplink control channel resource.

The control section 401 may assume that different uplink control channel resources in the same slot are not designated using the downlink control information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be composed of a signal generator, a signal generating circuit, or a signal generating apparatus, which is described based on general understanding of the technical field to which the present disclosure pertains.

For example, the transmission signal generation section 402 generates uplink control signals such as delivery acknowledgement information and channel state information (CSI), based on commands from the control section 401. Also, the transmission signal generation section 402 generates uplink data signals based on commands from the control section 401. For example, when a UL grant is included in a downlink control signal that is reported from the radio base station 10, the control section 401 instructs the transmission signal generation section 402 to generate an uplink data signal.

The mapping section 403 maps the uplink signals generated in the transmission signal generation section 402 to radio resources based on commands from the control section 401, and outputs the result to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired by the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 performs measurements with respect to the received signals. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, and SNR), the signal strength (for example, RSSI), transmission path information (for example, CSI), and so on. The measurement results may be output to the control section 401.

### (Hardware Structure)

Note that the block diagrams that have been used to describe the above embodiments illustrate blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically aggregated, or may be realized by directly or indirectly connecting two or more physically or logically separate pieces of apparatus (via wire or wireless, for example) and using a plurality of pieces of these apparatus. The functional block may be realized by combining the one piece of apparatus or the plurality of pieces of apparatus with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmission to function may be referred to as a transmitting unit, transmitter, or the like. In any case, as described above, the implementation method is not particularly limited.

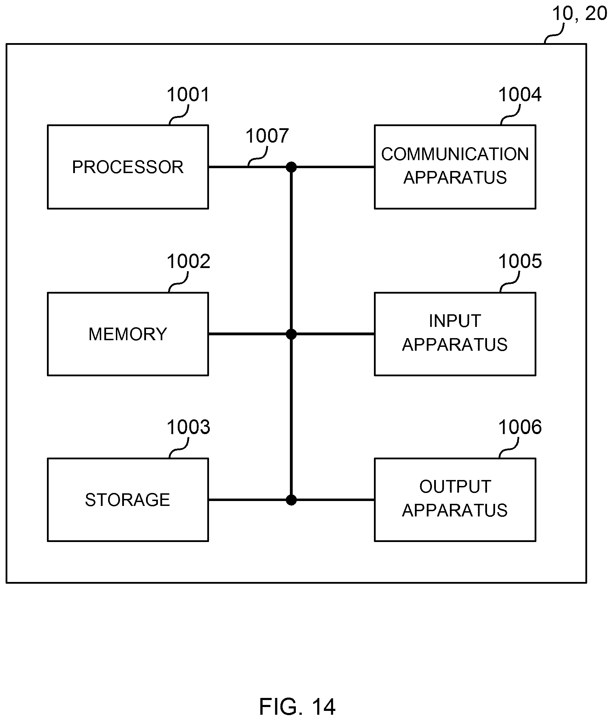

For example, the base station, the user terminal, and so on according to one embodiment of the present disclosure may function as a computer that executes the processing of the radio communication method of the present disclosure. Fig. 14 is a diagram showing an example of a hardware structure of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007 and so on.

Note that, in the following description, the word "apparatus" may be replaced by "circuit," "device," "unit" and so on. The hardware structure of the base station 10 and the user terminal 20 may be designed to include one or a plurality of apparatuses for each apparatus shown in the drawings, or may be designed not to include some apparatuses.

For example, although only one processor 1001 is shown, a plurality of processors may be provided. Furthermore, processes may be implemented with one processor, or processes may be implemented simultaneously, in sequence, or in different manners, on two or more processors. Note that the processor 1001 may be implemented with one or more chips.

Each function of the base station 10 and the user terminal 20 is implemented by reading given software (program) on hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from at least one of the storage 1003 and the communication apparatus 1004, into the memory 1002, and executes various processes according to these. As for the programs, programs to allow computers to execute at least part of the operations described in the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a register, a cache, a main memory (main storage device) and so on. The memory 1002 can store executable programs (program codes), software modules and/or the like for implementing the radio communication methods according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive), a magnetic stripe, a database, a server, and/or other appropriate storage media. The storage 1003 may be referred to as secondary storage apparatus.

The communication apparatus 1004 is hardware (transmitting/receiving device) for allowing inter-computer communication by using at least one of wired network and wireless network, and may be referred to as, for example, a network device, a network controller, a network card, a communication module and so on. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004. The transmitting/receiving section 103 may be implemented by physically or logically separating a transmitting section 103a and a receiving section 103b.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be structured to include hardware such as a microprocessor, a digital signal processor (DSP), an ASIC (Application Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of channels and symbols may be replaced by signals (signaling). The signal may also be a message. A reference signal may be abbreviated as an RS, and may be referred to as a pilot, a pilot signal, and so on, depending on which standard applies. Furthermore, a component carrier (CC) may be referred to as a cell, a frequency carrier, a carrier frequency and so on.

A radio frame may be comprised of one or a plurality of periods (frames) in a time domain. Each of one or a plurality of periods (frames) constituting a radio frame may be referred to as a subframe. Furthermore, a subframe may be comprised of one or a plurality of slots in the time domain. A subframe may be a fixed time duration (for example, 1 ms) not dependent on the numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain and so on.

A slot may be comprised of one or a plurality of symbols in the time domain (OFDM (Orthogonal Frequency Division multiplexing) symbols, SC-FDMA (Single Carrier Frequency Division Multiple Access) symbols, and so on). Also, a slot may be a time unit based on numerology.

Also, a slot may include a plurality of mini slots. Each mini slot may be comprised of one or a plurality of symbols in the time domain. Also, a mini slot may be referred to as a subslot. Each mini slot may be comprised of fewer symbols than a slot. A PDSCH (or PUSCH) transmitted in a time unit larger than a mini slot may be referred to as PDSCH (PUSCH) mapping type A. PDSCH (or PUSCH) transmitted using the mini slots may be referred to as PDSCH (PUSCH) mapping type B.

A radio frame, a subframe, a slot, a mini slot and a symbol all represent the time unit in signal communication. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a Transmission Time Interval (TTI), or a plurality of consecutive subframes may be referred to as a TTI, or one slot or one mini slot may be referred to as a TTI. That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that, when a TTI is given, the period of time (for example, the number of symbols) in which transport blocks, code blocks, codewords and so on are actually mapped may be shorter than the TTI.

Note that, when one slot or one mini slot is referred to as a TTI, one or more TTIs (that is, one or more slots or, one or more mini slots) may be the minimum time unit of scheduling. Also, the number of slots (the number of mini slots) to constitute this minimum time unit of scheduling may be controlled.

A TTI having a time duration of 1 ms may also be referred to as a normal TTI (TTI in LTE Rel. 8 to 12), a long TTI, a normal subframe, a long subframe, a slot and so on. A TTI that is shorter than a normal TTI may also be referred to as a shortened TTI, a short TTI, a partial TTI (or a fractional TTI), a shortened subframe, a short subframe, a mini slot, a sub-slot, a slot and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or a plurality of symbols in the time domain, and may be one slot, one mini slot, one subframe or one TTI in length. One TTI, one subframe, and the like each may be comprised of one or a plurality of resource blocks.

Note that one or a plurality of RBs may be referred to as a physical resource block (Physical RB (PRB)), a SubCarrier Group (SCG), a Resource Element Group (REG), an PRB pair, an RB pair and so on.

Furthermore, a resource block may be comprised of one or a plurality of resource elements (REs). For example, one RE may be a radio resource field of one subcarrier and one symbol.

The Bandwidth Part (BWP) (which may be called partial bandwidth etc.) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or a plurality of BWPs may be configured within one carrier.

At least one of the configured BWPs may be active, and the UE may not assume to transmit or receive a given signal/channel outside the active BWP. Note that "cell", "carrier", and the like in the present disclosure may be read as "BWP".

Note that the structures of radio frames, subframes, slots, mini slots, symbols and so on described above are merely examples. For example, configurations pertaining to the number of subframes included in a radio frame, the number of slots included in the subframe or the radio frame, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or magnetic particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, Downlink Control Information (DCI), Uplink Control Information (UCI), higher layer signaling (for example, RRC (Radio Resource Control) signaling, broadcast information (Master Information Block (MIB), System Information Block (SIB) and so on), and MAC (Medium Access Control) signaling), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as RRC messages, and can be, for example, an RRC connection setup (RRCConnectionSetup) message, RRC connection reconfiguration (RRCConnectionReconfiguration) message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as software, firmware, middleware, microcode or hardware description language, or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via communication media. For example, when software is transmitted from a website, a server or other remote sources by using at least one of wired technologies (coaxial cables, optical fiber cables, twisted-pair cables, digital subscriber lines (DSL) and so on) and wireless technologies (infrared radiation, microwaves and so on), at least one of these wired technologies and wireless technologies are also included in the definition of communication media.

The terms "system" and "network" as used in the present disclosure are used interchangeably.

In the present disclosure, the terms such as "precoding", "precoder", "weight (precoding weight)", "quasi-co-location (QCL)", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier," and "component carrier" may be used interchangeably. The base station may be called a term such as a macro cell, a small cell, a femto cell, a pico cell, and the like.

A base station can accommodate one or a plurality of (for example, three) cells. When a base station accommodates a plurality of cells, the entire coverage area of the base station can be partitioned into a plurality of smaller areas, and each smaller area can provide communication services through base station subsystems (for example, indoor small base stations (Remote Radio Heads (RRHs))). The term "cell" or "sector" refers to all or part of the coverage area of at least one of a base station and a base station subsystem that provides communication services within this coverage.

As used in the present disclosure, the terms such as "mobile station (MS)" "user terminal," "user equipment (UE)", and "terminal" may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client or some other suitable terms.

At least one of a base station and a mobile station may be referred to as transmitting apparatus, receiving apparatus, communication apparatus and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of a base station and a mobile station includes apparatus that does not necessarily move during a communication operation. For example, at least one of the base station and the mobile station may be an IoT (Internet of Things) apparatus, such as a sensor.

Furthermore, the base stations in the present disclosure may be replaced by user terminals. For example, each aspect/embodiment of the present disclosure may be applied to a structure in which communication between the base station and the user terminal is replaced by communication among a plurality of user terminals (which may be referred to as, for example, D2D (Device-to-Device), V2X (Vehicle-to-Everything) and so on). In this case, the user terminal 20 may have the functions of the base station 10 described above. In addition, the wording such as "up" and "down" may be replaced with the wording corresponding to the terminal-to-terminal communication (for example, "side"). For example, an uplink channel, a downlink channel and so on may be interpreted as a side channel.

Likewise, the user terminals in the present disclosure may be replaced by base stations. In this case, the base station 10 may have the functions of the user terminal 20 described above.

Certain actions that have been described in the present disclosure to be performed by base stations may, in some cases, be performed by their upper nodes. In a network comprised of one or a plurality of network nodes with base stations, it is clear that various operations that are performed so as to communicate with terminals can be performed by base stations, one or more network nodes (for example, MMEs (Mobility Management Entities), S-GWs (Serving-Gateways)) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new-radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), systems that use other adequate radio communication methods, and/or next-generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on."

Reference to elements with designations such as "first," "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The term "determining" as used in the present disclosure may encompass a wide variety of actions. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

"Judging" and "determining" may be read as "assuming", "expecting", "considering", or the like.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

In the present disclosure, when two elements are connected to each other, these elements can be considered "connected" or "coupled" to each other by using one or more electrical wires, cables, printed electrical connections, and the like, and, as a number of non-limiting and non-inclusive examples, by using electromagnetic energy having wavelengths in a radio frequency domain, a microwave domain, an optical (both visible and invisible) domain, and the like.

In the present disclosure, the phrase "A and B are different" may mean "A and B are different from each other." Note that the term may mean that "A and B are different from C". The terms such as "leave" "coupled" and the like may be interpreted as "different".

When terms such as "include," "including" and variations of these are used in the present disclosure, these terms are intended to be inclusive, in a manner similar to the way the term "comprising" is used. Furthermore, the term "or" as used in the present disclosure is intended to be not an exclusive OR.

In the present disclosure, when articles, such as a, an, and the are added in English translation, the present disclosure may include the plural forms of nouns that follow these articles.

Now, although invention according to the present disclosure has been described above in detail, it is obvious to those skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. A user terminal comprising:
a receiving section that receives a downlink shared channel scheduled using downlink control information;
a transmitting section that transmits a delivery acknowledgement signal for the downlink shared channel; and
a control section that controls transmission of the delivery acknowledgement signal using a downlink allocation index included in the downlink control information for each group determined based on a transmission slot for an uplink control channel designated by the downlink control information or for each group determined based on an uplink control channel resource designated by the downlink control information.

2. The user terminal according to claim 1, wherein the control section selects, based on UE capability, one of a method of controlling transmission of the delivery acknowledgement signal for each group determined based on the transmission slot for the uplink control channel, and a method of controlling transmission of the delivery acknowledgement signal for each group determined based on the uplink control channel resource.

3. The user terminal according to claim 1 or 2, wherein the control section assumes transmission of the delivery acknowledgement signal using different uplink control channel resources in a given slot, when the transmission of the delivery acknowledgement signal is controlled for each group determined based on the uplink control channel resource.

4. The user terminal according to claim 1, wherein the control section controls the transmission of the delivery acknowledgement signal for each group determined based on the uplink control channel resource regardless of UE capability.

5. The user terminal according to claim 1 or 4, wherein in a case where there are a plurality of groups using different uplink control channel resources in same slot, the control section performs control so that the delivery acknowledgement signal corresponding to any one of the plurality of groups is transmitted, when the transmission of the delivery acknowledgement signal is controlled for each group determined based on the uplink control channel resource.

6. The user terminal according to claim 1, 4, or 5, wherein the control section assumes that different uplink control channel resources in same slot are not designated in the downlink control information.
